# FASCICULE DE BREVET EUROPEEN

(11) **EP 1 392 529 B1**
(45) Date de publication et mention de la délivrance du brevet: **17.08.2005**
(21) Numéro de dépôt: 02748679.4
(22) Date de dépôt: 29.04.2002
(51) Int. Cl.: B60C 9/20

(54) **ARMATURE DE SOMMET POUR PNEUMATIQUE**
GÜRTELLAGENVERSTÄRKUNG FÜR EINEN REIFEN
CROWN PLY REINFORCEMENT FOR A TYRE

(30) Priorité: 03.05.2001 FR 0105950
(43) Date de publication de la demande: 03.03.2004
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: RUFFENACH, Jean-Marc, F-63118 CEBAZAT (FR); JALLAIS, Pierre, F-63400 Chamalieres (FR)
(74) Mandataire: Le Cam, Stéphane
(86) Numéro de dépôt international: PCT/EP2002/004710
(87) Numéro de publication internationale: WO 2002/090135

(56) Documents cités:
- US-A- 4 957 799
- US-A- 5 351 735
- US-A- 5 958 162

## Description

L'invention concerne un pneumatique à armature de carcasse radiale destinée à équiper des engins de chantier et/ou de Génie Civil tels que chargeuses, camions, niveleuse, scrapers.

Le pneumatique ci-dessus comprend au moins et principalement une armature de carcasse de câbles métalliques radiaux, et entre ladite armature de carcasse et la bande de roulement, une armature de sommet, qui comprend principalement une armature dite de travail composée d'au moins deux nappes de câbles métalliques inextensibles, parallèles entre eux dans chaque nappe, et croisés d'une nappe à la suivante en faisant avec la direction circonférentielle des angles pouvant être compris entre 0° et 45°. L'utilisation d'engins équipés de tels pneumatiques exige en outre, radialement à l'extérieur des nappes de travail, la présence d'une armature supplémentaire dite de protection, composée d'au moins une nappe de câbles métalliques élastiques. On appelle câble élastique un câble qui, sous une force de tension égale à sa force de rupture, présente un allongement relatif au moins égal à 3%, alors qu'un câble dit inextensible, présente, sous une force de traction égale à 10% de sa force de rupture, un allongement relatif au plus égal à 0,2%. Les câbles de la(des) nappe(s) de protection font avec la direction circonférentielle des angles pouvant être compris entre 5 et 35°, et, dans le cas de l'existence de deux nappes, sont généralement croisés entre eux d'une nappe à la suivante.

Si initialement et comme leur nom l'indique, les dites nappes de protection avaient pour fonction première de protéger l'armature de travail contre les agressions du sol subies par le pneumatique, leurs caractéristiques structurelles dans les pneumatiques contemporains font en sorte qu'elles apportent d'une part une forte contribution à la résistance à la séparation entre les deux nappes de travail, et sont d'autre part, la durée de vie des pneumatiques de Génie Civil étant plus grande, insuffisantes pour assurer une protection constante pendant ladite durée de vie.

Un pneumatique de l'espèce considérée est soumis de la part du sol sur lequel il évolue à de multiples agressions, en particulier pour les engins de chargement et de transport. De telles agressions par objets coupants, tranchants et autres, conduisent
a) à des coupures de bande de roulement, qui augmentent la vitesse de dégradation de ladite bande de roulement, à des coupures de nappes de protection, qui apportent une contribution moindre ou n'apportent plus de contribution à la résistance à la séparation entre nappes de travail, mais aussi à des coupures de nappes de travail avec possibilité de propagation et d'oxydation des éléments métalliques des dites nappes par l'humidité et les particules de sol,
b) à des perforations de sommet dans son intégralité, l'armature de carcasse pouvant elle-même être perforée selon la nature et la forme de l'objet agresseur.

La résistance à la coupure des nappes de protection et la résistance du sommet à la perforation se doit d'être améliorée.

Il est connu par le brevet US 3 589 425 de disposer d'un bord à l'autre de la bande de roulement d'un pneumatique pour avions, doté d'une armature de carcasse formée de plusieurs nappes d'éléments textiles croisés d'une nappe à la suivante, d'une part des nappes de fils textiles obliques affleurant les fonds de rainures circonférentielles de la bande de roulement afin de s'opposer aux effets de la force centrifuge sur ladite bande de roulement, et d'autre part deux nappes de câbles métalliques hyper élastiques avec un allongement relatif compris entre 15 et 40%, les dits câbles étant croisés d'une nappe à la suivante et les dites nappes étant noyées entre le fond des rainures de bande de roulement et l'armature de carcasse dudit pneumatique.

Le brevet FR 2 388 685, en vue d'éviter la naissance et de minimiser la propagation, vers l'armature de bande de roulement, de cassures en fond de rainures transversales d'un pneumatique de Génie Civil, enseigne de disposer, dans la portion non rainurée entre les fonds de rainures et l'armature de sommet, au moins une nappe de câbles peu extensibles (câbles d'acier ayant un allongement relatif inférieur à 0,5% sous une force de traction égale à 10% de la charge de rupture), l'inclinaison des câbles avec la direction circonférentielle étant inférieure à 30° et de préférence comprise entre 12 et 24°, et la distance radiale entre les fonds de rainures et ladite nappe de câbles étant inférieure et voisine du tiers de la distance radiale entre fonds de rainure et nappe de sommet radialement la plus proche de la bande de roulement Une telle structure ne protège pas contre les coupures et leur propagation et pénalise très fortement la résistance du sommet du pneumatique aux chocs imposés par l'agression rapide de gros obstacles.

En vue d'améliorer simultanément les résistances d'un sommet de pneumatique de Génie Civil aux trois types d'agressions par objets extérieurs que sont la résistance aux coupures, la résistance aux perforations, la résistance aux chocs, le pneumatique conforme à l'invention, comprenant une armature de carcasse radiale ancrée dans chaque bourrelet à un élément annulaire de renforcement de bourrelet, et radialement au-dessus une armature de sommet composée d'au moins deux nappes de sommet de travail de câbles métalliques inextensibles croisés d'une nappe à la suivante, les dites nappes ayant des largeurs au moins égales à 50% de la largeur L de bande de roulement et, radialement au-dessus de deux nappes de sommet de protection de câbles métalliques dits élastiques croisés d'une nappe à la suivante, la bande de roulement comportant dans sa partie non rainurée d'épaisseur D au moins une armature d'éléments de renforcement, est caractérisé en ce que ladite armature est composée d'au moins deux couches de monofilaments en matériau textile, parallèles entre eux dans chaque couche, les largeurs axiales des dites deux couches étant au moins égales à la largeur de la nappe de travail la moins large.

Il est particulièrement avantageux, parce que ne modifient que faiblement les rigidités de l'ensemble des nappes entre armature de carcasse et le sol, que les couches soient formées de monofilaments croisés d'une couche à la suivante en formant avec la direction circonférentielle des angles compris entre 50 et 60°.

Le matériau textile est de préférence un polyamide qu'il soit aliphatique ou aromatique. Par unité de largeur axiale et par unité de longueur circonférentielle de la partie de bande de roulement non rainurée, le volume occupé par les éléments des couches de renforcement est au plus égal à 20% du volume total, le volume de mélange caoutchouteux étant alors au moins égal à 80% dudit volume total : les caractéristiques de remplissage ci-dessus permettent d'obtenir un très bon compromis entre résistance aux coupures et résistance aux chocs de l'armature additionnelle de bande de roulement.

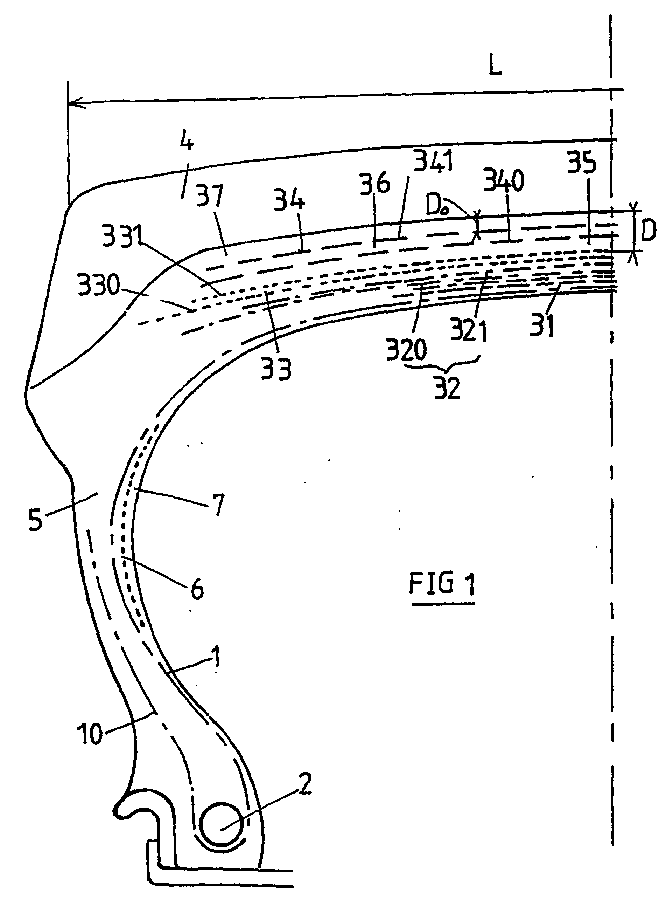

Les caractéristiques de la présente invention seront mieux comprises à l'aide de la description d'un mode de réalisation décrit à titre non limitatif et illustré par le dessin annexé sur lequel la figure unique 1 représente schématiquement, vue en section méridienne, un pneumatique pour engins de Génie Civil conforme à l'invention.

Ledit pneumatique, de dimension 18.00-33 XDT, comprend une armature de carcasse composée d'une seule nappe 1 de câbles métalliques radiaux en acier et inextensibles, ladite nappe 1 étant ancrée dans chaque bourrelet, généralement par enroulement autour d'une tringle 2, pour former des retournements 10 d'armature de carcasse, retournements dont les extrémités sont situées sensiblement à mi-hauteur de flancs 5. Ladite armature de carcasse est axialement à l'intérieur renforcée par un ensemble 6 de deux nappes de câbles en polyamide aliphatique, croisés d'une nappe et la suivante, les dites nappes étant situées axialement au milieu d'une épaisseur de mélange caoutchouteux 7 conséquente et radialement sensiblement au milieu du flanc 5. Entre ladite armature de carcasse 1 et la bande de roulement 4 est disposée une armature de sommet 3, qui comprend radialement de l'intérieur à l'extérieur :
- deux nappes 31 dites de frettage formées de câbles métalliques inextensibles faisant avec la direction circonférentielle un angle de 8° ; et de largeurs axiales égales à 28% et 22% de la largeur axiale L de bande de roulement,
- une armature 32 dite de travail et composée d'au moins deux nappes 320 et 321 de câbles métalliques inextensibles, parallèles entre eux dans chaque nappe, et croisés d'une nappe 320 à la suivante 321 en faisant avec la direction circonférentielle des angles respectivement égaux à 34° et 20°, les dites deux nappes 320 et 321 ayant respectivement des largeurs axiales égales à 75% et 55% de la largeur L de bande de roulement 4,
- radialement à l'extérieur de l'armature de travail 32, est disposée l'armature 33 de protection composée dans le cas décrit de deux nappes 330 et 331 de protection, les dites deux nappes étant formées de câbles dits élastiques, croisés d'une nappe 330 à la suivante 331 en faisant avec la direction circonférentielle des angles égaux à 28°, les largeurs axiales des dites deux nappes de protection 330 et 331 étant telles que la nappe 330 la plus large ait une largeur axiale (89% de la largeur L) supérieure à la largeur axiale de la nappe de travail 320 la plus large, et que la nappe 331 la moins large (68% de la largeur L) ait une largeur axiale supérieure à la largeur axiale de la nappe de travail 321 la moins large,
- dans la partie non rainurée de bande de roulement 4 et d'épaisseur D, mesurée dans le plan équatorial mais évidemment variable en fonction du point axial de mesure, est disposée une armature additionnelle 34 de bande de roulement, ladite armature étant composée de deux nappes 340 et 341 de monofilaments en polyamide aliphatique parallèles entre eux dans chaque nappe et croisés d'une nappe à la suivante en faisant avec la direction circonférentielle des angles égaux à 55°, les dites deux nappes 340 et 341 ayant des largeurs axiales (63% et 58% de la largeur L) supérieures à la largeur de la nappe de travail 321 la moins large. Les dites deux 340 et 341 découpent radialement la couche de mélange caoutchouteux formant la partie non rainurée de la bande de roulement en trois sous couches, la couche 35 entre la nappe radialement inférieure 340 de l'armature 34 et la nappe de protection 331 la plus à l'extérieur, la couche 36 séparant les deux nappes 340 et 341, et la couche 37 entre le fond des rainures et la nappe radialement supérieure 341 de l'armature 34, les dites sous couches 35, 36, 37 ayant une épaisseur D₀, mesurée dans le plan équatorial et sensiblement constante sur toute la largeur axiale, égale à D/3.

Les caractéristiques selon lesquelles les dits monofilaments sont en polyamide et radialement espacées des nappes de protection 330 et 331 minimisent la propagation des coupures vers l'armature de protection, ce qui lui permet de remplir son double rôle de protection et d'anti-séparation entre nappes de travail, et améliorent la résistance à la perforation. Les caractéristiques selon lesquelles les dits monofilaments sont orientés à un angle égal ou voisin de 55° et que l'armature 34 obéisse à une structure de remplissage donnée (volume occupé par les éléments de renforcement égal à 15% du volume total dans le cas décrit) évitent une rigidité en flexion excessive du sommet dans son entier et ne pénalisent pas la résistance chocs, bien au contraire l'améliorent.

Les résultats obtenus sont particulièrement convaincants en ce qui concerne la résistance aux coupures ; pour un même nombre d'heures de roulage effectuées sur un sol rocailleux avec passages répétés dans une flaque d'eau salée, le nombre de coupures observées sur la nappe 341 radialement la plus à l'extérieur est important mais les nappes de protection 331 et 330 sont intactes alors que les dites nappes de protection du pneumatique témoin (qui n'a pas de partie rainurée de bande de roulement renforcée) présentent de nombreuses coupures avec infiltration d'humidité et commencement d'oxydation des câbles élastiques des nappes de protection.

## Revendications

1. Pneumatique pour engins de Génie Civil comprenant une armature de carcasse radiale (1) ancrée dans chaque bourrelet à un élément annulaire (2) de renforcement de bourrelet, et radialement au-dessus une armature de sommet (3) composée d'au moins deux nappes de sommet de travail (320, 321) de câbles métalliques inextensibles croisés d'une nappe (320) à la suivante (321), les dites nappes ayant des largeurs au moins égales à 50% de la largeur L de bande de roulement (4) et, radialement au-dessus de deux nappes de sommet de protection (330, 331) de câbles métalliques dits élastiques croisés d'une nappe (330) à la suivante (331), la bande de roulement (4) comportant dans sa partie non rainurée d'épaisseur D au moins une armature (34) d'éléments de renforcement, **caractérisé en ce que** ladite armature (34) est composée d'au moins deux couches (340, 341) de monofilaments en matériau textile, parallèles entre eux dans chaque couche, les largeurs axiales des dites deux couches (340, 341) étant au moins égales à la largeur de la nappe de travail (321) la moins large.

2. Pneumatique selon la revendication 1, **caractérisé en ce que** les monofilaments textiles sont croisés d'une couche (340) à la suivante (341) en faisant avec la direction circonférentielle des angles compris entre 50 et 60°.

3. Pneumatique selon la revendication 1, **caractérisé en ce que** le matériau textile est un polyamide.

4. Pneumatique selon la revendication 1, **caractérisé en ce que** le volume occupé par les éléments des couches de renforcement (340, 341), par unité de largeur axiale et par unité de longueur circonférentielle de la partie de bande de roulement 4 non rainurée, est au plus égal à 20% du volume total, le volume de mélange caoutchouteux étant alors au moins égal à 80% dudit volume total.

## Patentansprüche

1. Luftreifen für Baufahrzeuge, der eine radiale Karkassenbewehrung (1), die in jedem Wulst an einem ringförmigen Verstärkungselement (2) des Wulstes verankert ist, und in radialer Richtung darüber eine Scheitelbewehrung (3) aufweist, die aus mindestens zwei Funktionslagen des Scheitels (320, 321) aus nicht dehnbaren, von einer Lage (320) zur nächsten Lage (321) gekreuzten Metallseilen, wobei die Lagen eine Breite von mindestens 50 % der Breite L des Laufstreifens (4) aufweisen, und radial darüber zwei Schutzlagen des Scheitels (330, 331) aus so genannten elastischen Metallseilen zusammengesetzt ist, die von einer Lage (330) zur nächsten (331) gekreuzt sind, wobei der Laufstreifen (4) in seinem Teil ohne Rillen mit einer Dicke D mindestens eine Bewehrung (34) von Verstärkungselementen aufweist, **dadurch gekennzeichnet, dass** sich die Bewehrung (34) aus mindestens zwei Lagen (340, 341) aus Monofilamenten eines textilen Materials zusammensetzt, die in jeder Lage parallel zueinander verlaufen, wobei die axialen Breiten der beiden Lagen (340, 341) mindestens der Breite der Arbeitslage 321 entsprechen, die am wenigsten breit ist.

2. Luftreifen nach Anspruch 1, **dadurch gekennzeichnet, dass** die textilen Monofilamente von einer Lage (340) zur nächsten Lage (341) gekreuzt verlaufen und mit der Umfangsrichtung Winkel von 50 bis 60° einschließen.

3. Luftreifen nach Anspruch 1, **dadurch gekennzeichnet, dass** das textile Material ein Polyamid ist.

4. Luftreifen nach Anspruch 1, **dadurch gekennzeichnet, dass** das Volumen, das von den Elementen der Verstärkungslagen (340, 341) eingenommen wird, pro Einheit in der axialen Breite und pro Einheit der Länge des Teils des Laufstreifens 4 ohne Rillen in Umfangsrichtung höchstens 20 % des Gesamtvolumens beträgt, wobei das Volumen der Kautschukmischung somit mindestens 80 % des Gesamtvolumens ausmacht.

## Claims

1. Tyre for heavy civil engineering vehicles comprising a radial carcass reinforcement (1) anchored in each bead to an annular bead reinforcement element (2), and radially above it a crown reinforcement (3) consisting of at least two working crown plies (320, 321) of inextensible metallic cables crossed from one ply (320) to the next (321), the said plies having widths at least equal to 50% of the width L of the tread (4) and, radially above these, two protection crown plies (330, 331) of so-termed elastic metallic cables crossed from one ply (330) to the next (331), the tread (4) comprising in its ungrooved portion of thickness D at least one armature (34) of reinforcement elements, **characterised in that** the said armature (34) is composed of at least two layers (340, 341) of textile monofilaments parallel to one another in each layer, the axial widths of the said two layers (340, 341) being at least equal to the width of the narrower working ply (321).

2. Tyre according to Claim 1, **characterised in that** the textile monofilaments are crossed from one layer (340) to the next (341) and make angles between 50° and 60° relative to the circumferential direction.

3. Tyre according to Claim 1, **characterised in that** the textile material is a polyamide.

4. Tyre according to Claim 1, **characterised in that** the volume occupied by the elements of the reinforcement layers (340, 341), per unit of axial width and per unit of circumferential length of the ungrooved portion of the tread 4, is at most equal to 20% of the total volume, the volume of rubber mixture therefore being at least equal to 80% of the said total volume.
